# NOUVEAU FASCICULE DE BREVET EUROPEEN

(11) **EP 0 155 204 B2**
(45) Date de publication et mention de la décision concernant l'opposition: **23.12.1998**
(45) Mention de la délivrance du brevet: 15.12.1993
(21) Numéro de dépôt: 85400267.2
(22) Date de dépôt: 15.02.1985
(51) Int. Cl.: B01D 39/08, B07B 1/46, D03D 15/02

(54) **Toile pour crible vibrant ou à secousses et procédé de fabrication d'une telle toile**
Tuch für schwingende oder rüttelnde Siebeinrichtung und Verfahren zu dessen Herstellung
Cloth for a vibrating or shaking screening apparatus, and process for producing it

(30) Priorité: 17.02.1984 FR 8402442
(43) Date de publication de la demande: 18.09.1985
(73) Titulaire: TRANSFER OF TECHNOLOGY INTERNATIONAL- "T.T.I.", 86100 Chatellerault (FR)
(72) Inventeur: Szilvasi, Peter, F-86100 Chatellerault (FR)
(74) Mandataire: Kohn, Philippe

(56) Documents cités:
- EP-A- 0 130 106
- DE-B- 1 151 430
- DE-C- 666 906
- DE-C- 690 947
- DE-C- 723 946
- FR-A- 664 655
- FR-A- 679 944
- FR-A- 1 031 748
- FR-A- 2 322 670
- FR-A- 2 394 393
- FR-A- 2 548 038
- GB-A- 361 300
- US-A- 2 368 689
- US-A- 2 992 469
- The Condensed Chemical Dictionary , 10th Edition, 1981, Van Nostrand Reinhold Company, page 839/840
- "Le Criblage", Borchure de la Société GANTOIS S.A.
- "GIRETHANE", Brochure de la Société GIRON S.A.
- S.M. Alger, Polymer Science Dictionary, 1989,Elsevier Science, Publischers LTD pages 341,342
- PLASTICS ENGINEERING HANDBOOK OF THE SOCIETY OF THE PLACTICS INDUSTRY INC"

## Description

L'invention concerne une toile du type à mailles, destinées notamment à équiper les cribles animés de mouvement de vibration utilisés pour la séparation ou le calibrage des déblais de forage ; bien entendu, ce type de toile est applicable de manière générale à tout crible ou tamis soumis à des chocs, à des charges ou toute autre contrainte. Elle concerne également un procédé de fabrication pour une telle toile.

Les cribles sont généralement utilisés dans l'industrie pour calibrer ou séparer, suivant leur grosseur, des fragments solides en vue de les trier, de les distinguer, de les choisir selon les dimensions des malles du crible utilisé.

Ce type de tamis est en particulier utilisé pour le tri des déblais de forage dans les mines ou dans les carrières. Le tamis peut être constitué soit de tôle perforée, soit de grilles ou de barreaux, ou encore d'une toile à quadrillage formée de fils de chaîne et de trame entrecroisés, pour définir des mailles régulières, dont les dimensions correspondent au calibrage des produits ou objets à trier.

Ces tamis sont le plus souvent montés sur un cadre, luimême fixé sur un châssis vibrant pour favoriser l'écoulement du produit à travers les mailles. Le tamis est donc soumis à de multiples contraintes, d'une part en raison des vibrations, d'autre part du fait des charges qu'il supporte et des chocs qu'il enregistre.

Les cribles à toile métallique, dont il est question, présentent l'inconvénient de s'user rapidement et surtout de se déformer sous l'effet de la vibration. On a observé en effet que les fils de chaîne et les fils de trame glissent d'autant plus les uns par rapport aux autres en leurs points d'intersection qu'ils sont usés et réciproquement qu'ils s'usent d'autant plus qu'ils glissent, processus cumulatif qui engendre rapidement une irrégularité dans les malles, nuisant profondément aux qualités de calibrage du tamis. En outre, les fils métalliques cèdent sous les coups de butoirs provoqués par les charges en raison notamment de leur usure aux points de croisement des fils. Enfin, ces toiles métalliques sont relativement lourdes, ce qui les rend peu maniable et entraîne des coûts de transport élevés.

On connaît également des cribles dont la toile est constituée d'une âme métallique entourée d'un gainage caoutchouteux, mais les toiles connues de ce type, pour présenter une bonne précision de criblage tout le long de leur vie, sont constituées de fils collés ou vulcanisés aux endroits des croisements, et ce collage ou vulcanisation a une incidence sur l'élasticité de la toile et ne résout pas le problème de la constance dimensionnelle du maillage sur toute la surface de celle-ci.

On connaît du document FR-A-2.394.393 une toile pour crible vibrant ou à secousses du type constitué d'un quadrillage à malles ondulées défini par des fils composites de chaîne et de trame entrecroisés dont chacun comporte une âme continue en acier à ressort et une gaine d'enrobage résistant à l'abrasion et qui sont entrecroisés par tissage.

Les documents FR-A-2.322.670 et DE-B-1.151.430 concernent des toiles dans lesquels les fils sont retenus entre eux par fusion des gaines en polyuréthanne.

Un objet de l'invention est donc de réaliser des toiles pour cribles vibrants remédiant à ces inconvénients et dont la durée de vie soit notablement plus longue que celle des toiles conventionnelles en raison de leur résistance à l'abrasion et aux chocs.

Un autre objet de l'invention consiste à obtenir des toiles sensiblement moins lourdes que les toiles métalliques connues et dont les malles sont quasiment indéformables, pratiquement jusqu'à leur usure complète.

A cet effet, l'invention concerne une toile pour crible vibrant ou à secousses destinée notamment à la séparation ou au calibrage des déblais de forage principalement dans les mines et carrières, du type constitué d'un quadrillage à mailles ondulées, défini par des fils composite de chaîne et de trame entrecroisés, toile caractérisée en ce qu'elle est constituée au moyen de fils ayant une âme continue en acier à ressort au diamètre minimal de 1 mm et une gaine d'enrobage résistant à l'abrasion en polyuréthanne à l'épaisseur minimale de 0,5 mm ou la moitié du diamètre du fil d'âme, munis d'ondulations permanentes, après fabrication du fil composite et avant le tissage de la toile, lesdits fils composites ondulés étant entrecroisés par tissage pour constituer des fils de trame et des fils de chaîne fermement retenus entre eux uniquement par des crans d'arrêt constitués par lesdites ondulations sans aucune autre méthode, notamment collage ou vulcanisation aux croisements, les ondulations des fils de chaîne et des fils de trame ayant un pas de répétition constant pour former lesdits crans d'arrêt aux endroits du croisement des fils.

Selon une autre caractéristique de l'invention, les fils se croisent en des endroits de croisements déterminés tous les trois crans de la longueur desdits fils.

L'invention concerne aussi un procédé de fabrication d'une toile pour crible vibrant ou à secousses du type constitué d'un quadrillage à malles (4) ondulées, défini par des fils composites de chaîne et de trame entrecroisés, caractérisé en ce qu'on munit d'ondulations permanentes selon un pas de répétition constant à l'aide d'une machine à onduler équipée de molettes adaptées au diamètre du fil et aux dimensions désirées pour les mailles, les fils ayant une âme continue en acier à ressort au diamètre minimal de 1 mm et une gaine d'enrobage résistant à l'abrasion en polyuréthanne à l'épaisseur minimale de 0,5 mm ou la moitié du diamètre du fil d'âme et on tisse la toile pour constituer des fils de chaîne et de trame fermement retenus entre eux uniquement par des crans d'arrêt constitués par les ondulations permanentes.

Selon d'autres caractéristiques du procédé :
- on recouvre l'âme des fils par un gainage par extrusion;
- on dépose un lubrifiant sur les fils de chaîne et de trame avant de les tisser ;
- on dépose un lubrifiant sur les fils de chaîne et les fils de trame en les tissant.

D'autres caractéristiques et avantages de l'invention ressortiront de la description ci-après et des dessins annexés dans lesquels :
- la figure 1 est une vue schématique en perspective d'une partie de la toile selon l'invention montée dans un cadre ;
- la figure 2 est une vue montrant le détail des fils entrecroisés au niveau de leurs intersections.

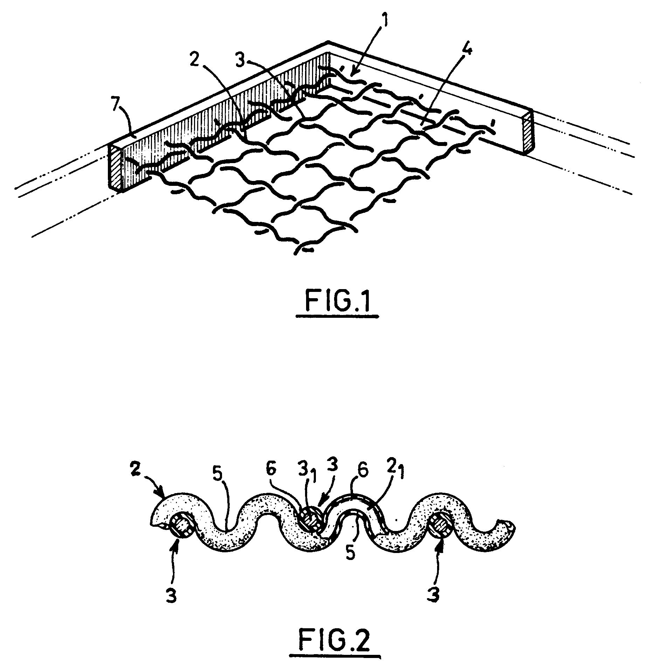

Le crible de l'invention schématiquement représenté sur la figure 1 est formé d'une toile 1 formée de fils de chaîne 2 longitudinaux orientés parallèlement, définissant avec des fils de trame 3 transversaux orientés orthogonalement aux fils de chaîne 2 et donc également parallèlement entre eux, des mailles 4 continues constituant un quadrillage régulier de fils de chaîne 2 et de trame 3 entrecroisés, les fils de chaîne 2 et de trame 3 étant légèrement ondulés de manière permanente sur toute leur longueur selon un pas de répétition constant, de façon à ce que les ondulations seules (précisé en fig. 2 pour mieux illustrer l'invention) constituant sur l'ensemble des fils des crans d'arrêt 5 de positionnement symétriques permettant une bonne retenue des fils entre eux.

Selon l'invention, les fils 2 et 3 sont réalisés à partir d'une âme 2₁-3₁ en acier à haute résistance présentant des caractéristiques supérieures en matière de « tenu aux vibrations », à savoir acier à ressort que l'on recouvre sur tout son pourtour et sur toute sa longueur par extrusion d'un gainage (6) en une matière choisie pour son élasticité et sa résistance à l'abrasion, à savoir du polyuréthanne. Ce gainage en plus de la résistance à l'abrasion qu'il confère aux fils lorsque ceux-ci sont soumis aux vibrations, apporte également une protection contre l'oxydation de l'âme et empêche ainsi la contamination oxydique des produits ou matériaux disposés sur la toile. Ce fait est particulièrement intéressant dans l'industrie alimentaire, chimique et du charbonnage notamment.

Après la fabrication du fil composite, celui-ci est muni d'ondulations permanentes et c'est à partir de fils de chaîne 2 et de fils de trame 3 déjà ondulés que l'on effectue le tissage de la toile.

On ondule le fil composite à l'aide d'une machine à onduler équipée de molettes adaptées au diamètre du fil composite et aux dimensions désirées pour la maille. On peut également effectuer cette opération à l'aide d'une presse à estamper, équipée de l'outillage appropriée.

Pour effectuer le tissage, on introduit les fils composites ondulés dans un métier à tisser. On obtient ainsi une toile que l'on coupe à ses dimensions définitives et que l'on peut éventuellement munir de crochets de tension, ou simplement border de bandes de polyuréthanne ou d'un autre matériau similaire que l'on colle ou que l'on fixe de manière convenable.

La précision dimensionnelle des mailles obtenues peut être ainsi très élevée dans la mesure de la précision sur le diamètre total du fil composite (âme + recouvrement) que l'on peut couramment fixer à plus de 0,03 mm et de la précision de l'outillage. Cette précision est encore accrue par le fait que, selon une caractéristique avantageuse de l'invention, on dépose un lubrifiant sur les fils composites lors du tissage ou immédiatement avant, ce qui facilite leur mise en place aux endroits où les ondulations respectives d'un fil de chaîne 2 et d'un fil de trame 3 se superposent et s'imbriquent, que l'on désignera dans la suite par « points de croisements » ou « croisements ».

cela est important, car par suite de la présence du gainage ou revêtement, les fils sont ondulés moins finement qu'ils seraient en l'absence de gainage ou revêtement afin d'assurer un maintien correct dans les crans 5 formés par les ondulations. Compte tenu de la pression obtenue aux croisements et à cause de la déformation élastique du revêtement, il ne serait pas possible d'obtenir une mise en place aussi excellemment précise des fils dans les ondulations sans l'aide du lubrifiant, dont ils sont enduits.

Il faut noter que, contrairement à la plupart des toiles connues, les fils composites de la toile selon l'invention ne sont pas collés solidement à l'aide d'un adhésif ou vulcanisés aux points de croisements pour maintenir un positionnement correct, donc une précision constante des dimensions des malles, puisqu'ils sont maintenus en place grâce à la seule présence des ondulations.

Il faut également noter que la présence de gainage permet, en plus de la limitation de l'usure lors de l'utilisation de la toile comme il sera vu plus loin, de protéger l'âme du fil des blessures causées par les outils de mise en forme. En effet, les dents des molettes d'ondulation, comme les inserts des outils de presse, en l'absence de gainage, arracheraient des copeaux et diminueraient le diamètre du fil, créant ainsi des points de rupture ; ils auraient donc tendance à casser prématurément, ce qui est évité grâce à la présence du gainage, lequel crée d'un côté des fils une couche de protection de l'âme contre toute blessure et de l'autre côté une couche de protection contre l'usure.

Le tissage de la toile représentée sur la figure 1 est réalisée non pas de telle sorte qu'il y ait croisement de deux fils 2-3 dans tous les crans 5 de ceux-ci, mais qu'il y ait croisement seulement tous les trois crans. Ainsi si l'on considère (figure 2) par exemple un fil de chaîne 2 muni d'ondulations déterminant des crans 5 successivement en dessous et au dessus de lui, et si l'on a un fil de trame 3 positionné dans un premier cran, disons déterminé en dessous du fil de chaîne 2, il n'y aura aucun fil de trame dans le deuxième cran immédiatement voisin et déterminé au dessus, ni dans le cran suivant (troisième cran déterminé à nouveau en dessous), mais un fil de trame 3 dans le quatrième cran déterminé au dessus, pas de fil de trame dans le cinquième et sixième crans (respectivement en dessous et au dessus) et à nouveau un fil de trame 3 dans le septième cran déterminé également au dessous. Ainsi si l'on considère un fil de chaîne 2 ou un fil de trame 3 s'étendant dans une première direction, on trouve des fils de trame 3 ou des fils de chaîne 2 se succédant en direction orthogonale à lui successivement au dessus et au dessous de lui de telle sorte qu'un cran 5 de dessus et un cran 5 de dessous voisins soient libres entre deux fils s'étendant en des directions parallèles successives.

La toile ainsi réalisée est tendue de façon classique sur un cadre 7, lui-même associé à un châssis vibrant ou à tout autre machine industrielle utilisée pour le tri ou le calibrage.

Les toiles ainsi obtenues sont, en raison de l'aptitude vibratoire de l'acier à ressort et de ses qualités élastiques, d'une grande résistance mécanique et d'une déformabilité pratiquement nulle, tant que l'usure n'est que partielle, de sorte que les mailles restent régulières jusqu'à l'usure complète de la toile. En outre, l'absence de colle ou vulcanisation aux points de croisement des fils et le choix de l'enrobage en polyuréthanne confèrent à la toile un contact élastique à ces points de croisement et une bonne capacité d'absorption aux chocs, ainsi qu'une bonne résistance à l'abrasion. Grâce toujours à l'élasticité et aux caractéristiques vibratoires supérieures des fils, les toiles ont une tendance réduite au colmatage et au goujonnage. Enfin, les toiles sont plus légères, plus maniables et par conséquent plus facilement transportables, de même que moins bruyantes en utilisation que les toiles métalliques connues.

Plus précisément, il faut noter que l'usure du sommet des ondulations ne correspond pas à une usure grave de la toile, car les sommets sont éminemment exposés à l'usure, encore que bien après ce début d'usure du gainage uniquement, c'est l'ensemble « âme-gainage » du fil qui s'use, toujours sans détérioration des caractéristiques de fonctionnement du crible, jusqu'à ce que le fil composite ait son épaisseur réduite à la moitié de son épaisseur initiale, ou ait été cassé accidentellement avant d'atteindre cette épaisseur. Il faut également noter que le revêtement en polyuréthanne confère une bonne résistance à la plupart des agents chimiques, des acides dilués à température ambiante, des hydrocarbures, des solvants, aux rayons ultraviolets UV, à la déchirure et à l'abrasion comme on l'a vu, à la chaleur jusqu'à 80°C environ, aux atmosphères sèches, à la traction et à un nombre d'autres agents entraînant la détérioration rapide des matériaux entrant habituellement dans la fabrication des toiles de crible.

La plus grande longévité des toiles selon l'invention permet de réduire notablement la fréquence des arrêts de crible en vue de changement des toiles usées. De même, la productivité d'une surface de crible donnée grâce à ces toiles composites est accrue et cela d'autant plus qu'on peut par le choix d'un diamètre de fils relativement faible augmenter la surface utile ou criblante du crible, par conséquent accroître son rendement tout en maintenant sa longévité au-delà de celle des toiles métalliques classiques.

A titre d'exemple, on peut mentionner que le rapport du diamètre du fil composite au diamètre de l'âme en acier à ressort peut être couramment choisi au moins égal à 2:1. Ainsi, avec un fil d'acier de 1 mm de diamètre, le fil aura un diamètre d'utilisation ou composite de 2 mm. Cette remarque est très importante, car plus le rapport est grand ou plus l'épaisseur du gainage est importante, plus longue est la durée de vie de la toile. De plus, ni le diamètre maximal du fil, ni les dimensions de la toile, ni le mode de tissage ou la forme des mailles ne sont limités, il est par exemple parfaitement possible de réaliser des toiles selon l'invention à l'aide de fils ayant un diamètre d'une quinzaine de millimètres et des mailles de 100 sur 150 mm.

En conséquence, l'invention n'est pas limitée à la forme de réalisation ci-dessus décrite et représentée, et on pourra prévoir d'autres formes de réalisation sans sortir du cadre de cette invention.

## Revendications

1. Toile pour crible vibrant ou à secousses destinée notamment à la séparation ou au calibrage des déblais de forage principalement dans les mines et carrières, du type constitué d'un quadrillage à mailles (4) ondulées, défini par des fils composite de chaîne (2) et de trame entrecroisés, toile caractérisée en ce qu'elle est constituée au moyen de fils ayant une âme continue (2₁ - 3₁) en acier à ressort au diamètre minimal de 1 mm et une gaine (6) d'enrobage résistant à l'abrasion en polyuréthanne à l'épaisseur minimale de 0,5 mm ou la moitié du diamètre du fil d'âme, munis d'ondulations permanentes, après fabrication du fil composite et avant le tissage de la toile, lesdits fils composites ondulés étant entrecroisés par tissage pour constituer des fils de trame (3) et des fils de chaîne (2) fermement retenus entre eux uniquement par des crans (5) d'arrêt constitués par lesdites ondulations sans aucune autre méthode, notamment collage ou vulcanisation aux croisements, les ondulations des fils de chaîne (2) et des fils de trame (3) ayant un pas de répétition constant pour former lesdits crans (5) d'arrêt aux endroits du croisement des fils.

2. Toile selon la revendication 1, caractérisée en ce que les fils (2-3) se croisent en des endroits de croisements déterminés tous les trois crans (5) de la longueur desdits fils.

3. Procédé de fabrication d'une toile pour crible vibrant ou à secousses du type constitué d'un quadrillage à malles (4) ondulées, défini par des fils composites de chaîne (2) et de trame (3) entrecroisés, caractérisé en ce qu'on munit d'ondulations permanentes selon un pas de répétition constant à l'aide d'une machine à onduler équipée de molettes adaptées au diamètre du fil et aux dimensions désirées pour les malles, les fils ayant une âme continue (2₁ - 3₁) en acier à ressort au diamètre minimal de 1 mm et une gaine (6) d'enrobage résistant à l'abrasion en polyuréthanne à l'épaisseur minimale de 0,5 mm ou la moitié du diamètre du fil d'âme et on tisse la toile pour constituer des fils de chaîne (2) et de trame (3) fermement retenus entre eux uniquement par des crans (5) d'arrêt constitués par les ondulations permanentes.

4. Procédé de fabrication d'une toile pour crible vibrant ou à secousses selon la revendication 3, caractérisé en ce que l'on recouvre l'âme (2₁ - 3₁) des fils (2-3) par un gainage (6) par extrusion.

5. Procédé de fabrication d'une toile pour crible vibrant ou à secousses selon la revendication 3, caractérisé en ce qu'on dépose un lubrifiant sur les fils de chaîne (2) et de trame (3) avant de les tisser.

6. Procédé de fabrication d'une toile selon la revendication 3, caractérisé en ce qu'on dépose un lubrifiant sur les fils de chaîne (2) et les fils de trame (3) en les tissant.

## Claims

1. Screen mat, cloth or like used in vibrating or shaking machines in particular for the separation or calibration of debris or spoils extracted from mines, quarries, the type that is made up of orthogonally crossed crimped wires to form the mesh (4), determined by crossing composite warp wires (2) and cross wires (3), screen, mat or like characterized in that at least in part it is made up of continuous spring steel wires (2₁ - 3₁) having a diameter of minimum 1mm and an abrasion-resistant plyurethane coating (6) with a thickness of minimum 0.5 mm or the half of the core wires diameter, wires are provided with permanent crimps, after manufacturing of the composite wire and before weaving of the mat, that cross each other by weaving to compose the warp wires (2) and the cross wires (3) firmly withheld one to another solely by the positioning notches (5) in the said crimps without any other means, particularly by bonding or vulcanization at the crossings, the crimps in the warp wires (2) and the cross wires (3) having a constant pitch to form the said positioning notches (5) at the wires crossing points.

2. Screen mat, clotH or like as per claim 1, characterized in that the wires (2-3) cross each other over the crossing points set at every third notches (5) over the length of the said wires.

3. Process to manufacture a screen, mat or like for vibrating or shaking machines, the type that is made up of orthogonally crossed crimped wires to form the meshes (4), defined by composite warp wires (4) and cross wires (3) crossing each other, characterized in that they are provided with permanent crimps in a repeated and constant manner with the help of a crimping machine fitted with crimping wheels set in respect of the wire diameter and the mesh size, the wires having a coninuous core (2₁ - 3₁) spring steel wire of minimum 1 mm and an abrasion-resistant polyurethan coating (6) with a minimum of 0.5 mm thickness or the half of the core wire's diameter, then the screen, cloth or like is woven to have the warp wires (2) and the cross wires (3) held firmly together solely by the positioning notches (5) constituted by the permanent crimps.

4. Process to manufacture a screen mat, cloth or like for vibrating or shaking machine as per claim 3, characterized in that the core wires (2₁ - 3₁) of the composite wires (2-3) are coated with a sheathing (6) by extrusion.

5. Process to manufacture a screen mat, cloth or like for vibrating or shaking machine as per claim 3, characterized in that a lubricant is deposited on the warp wires (2) and the cross wires (3) prior to weaving.

6. Process to manufacture a screen mat, cloth or like for vibrating or shaking machine as per claim 3, characterized in that a lubricant is deposited on the warp wires (2) and cross wires (3) at the moment of weaving.

## Patentansprüche

1. Siebe für Schwing- oder Stoss-siebmaschine, insbesondere für die Trennung und die Klassierung von Bohrungsabraum hauptsächlich in Bergwerken und Steinbrüchen, die aus einem mit gewellten Maschen versehenen Machermuster (4) besteht, das mit durchkreuzend zusammengesezten Kettendrähten (2) und Einschlagdrähten (3) bestimmt ist, dadurch gekennzeichnet, dass sie aus einen einen geringst 1 mm Durchmesser aufweisenden und kontunierlichen Federstahl Kern (2₁-3₁) und eine abriebfeste Umhüllung (6) aus Polyurethan, deren Dichte geringst 0,5 mm oder halbe des Durchmessers des Kerndrahts ist, aufweisenden Drähten besteht, die nach der Herstellung des zusammengestzten Draht und vor dem Weben mit permanente Wogen versehen sind, wobei die zusammengesetzte gewellte Drähte durch Weben durchgekreutzt sind, um Kettendrähte (3) und Einschlagdrähte (2) zu bilden, die nur mit aus den Wogen bestehenden Sperrklinken (5) ohne anderer Methode, insbesondere Kleben oder Vulkaniesierung, an den Kreuzstellen zusammenfestgehalten sind, wobei die Wogen der Kettendrähten (3) und Einschlagdrähten (2) ein standhafte Wiederholungsschritt haben, um die Sperrklinken (5) an der Kreuzungstellen zu bilden.

2. Siebe gemäss Anspruch 1, dadurch gekennzeichnet, dass die Drähte (2-3) sich an Kreuzungstellen durchkreuzen, die an allen drei Klinken (5) der Länge der Drähten bestimmt sind.

3. Herstellungsverfahren einer Siebe für Schwing- oder Stoss-siebmachine, die aus einem mit gewellten Maschen versehenen Machermuster (4) besteht, das mit durchkreuzend zusammengesezten Kettendrähten (2) und Einschlagdrähten (3) bestimmt ist, dadurch gekennzeichnet, dass die einen einen geringst 1 mm Durchmesser aufweisenden und kontunierlichen Federstahl Kern (2₁-3₁) und eine abriebfeste Umhüllung (6) aus Polyurethan, deren Dichte geringst 0,5 mm oder halbe des Durchmessers des Kerndrahts ist, aufweisenden Drähten mittels einer mit Zahnrädern versehenen Wellenmaschine mit permanente Wogen nach einem konstanten Wiederholungsschritt versehen werden, wobei die Zahnräder an dem Durchmesser des Drahts und an den gewünschten Dimensionen der Maschen angepasst sind, und dass die Siebe gewebt wird, um Kettendrähte (3) und Einschlagdrähte (2) zu bilden, die nur mit aus den Wogen bestehenden Sperrklinken (5) zusammenfestgehalten sind.

4. Herstellungsverfahren einer Siebe für Schwing- oder Stoss-siebmachine gemäss Anspruch 3, dadurch gekennzeichnet, dass der Kern (2₁-3₁) der Drähte (2-3) mit einer Umhüllung (6) durch Extrusion umgehüllt wird.

5. Herstellungsverfahren einer Siebe für Schwing- oder Stoss-siebmachine gemäss Anspruch 3, dadurch gekennzeichnet, dass ein Schmiermittel auf die Kettendrähte (3) und die Einschlagdrähte (2) vor ihrem Weben abgelegt wird.

6. Herstellungsverfahren einer Siebe für Schwing- oder Stoss-siebmachine gemäss Anspruch 3, dadurch gekennzeichnet, dass ein Schmiermittel auf die Kettendrähte (3) und die Einschlagdrähte (2) während ihrem Weben abgelegt wird.
